(19) Europäisches Patentamt / European Patent Office / Office européen des brevets

(11) **EP 4 109 344 A1**

(12) **EUROPEAN PATENT APPLICATION**

(43) Date of publication:
**28.12.2022 Bulletin 2022/52**

(21) Application number: **22163926.3**

(22) Date of filing: **23.03.2022**

(51) International Patent Classification (IPC):
**G06N 3/04** *(2006.01)*       **G06N 3/08** *(2006.01)*

(52) Cooperative Patent Classification (CPC):
**G06N 3/084; G06N 3/0472**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.06.2021 US 202117357687**

(71) Applicant: **INTEL Corporation**
**Santa Clara, CA 95054 (US)**

(72) Inventors:
• **Titov, Alexey**
**San Carlos, 94070 (US)**
• **Lyashevsky, Alexander**
**Cupertino, 95014 (US)**
• **Kuszner, Lukasz**
**80-176 Gdansk (PL)**

(74) Representative: **HGF**
**HGF Limited**
**1 City Walk**
**Leeds LS11 9DX (GB)**

(54) **METHODS, SYSTEMS, ARTICLES OF MANUFACTURE AND APPARATUS TO IMPROVE ALGORITHMIC SOLVER PERFORMANCE**

(57)     Methods, apparatus, systems, and articles of manufacture are disclosed to improve algorithmic solver performance. An example apparatus includes graph transforming circuitry to generate a vector representation corresponding to a graph input, vector classification circuitry to generate a node embedding machine learning classifier, the node embedding machine learning classifier to cause an output layer of probabilities corresponding to nodes of the graph input, loss calculating circuitry to train a model based on a target algorithmic function, the loss calculating circuitry to inject a solution diversity to reduce equivalent solution error of the target algorithmic function, and algorithmic solving circuitry to calculate solutions based on ranked ones of the output layer of probabilities.

FIG. 1

**Description**

FIELD OF THE DISCLOSURE

This disclosure relates generally to graphs and graph theory and, more particularly, to methods, systems, articles of manufacture and apparatus to improve algorithmic solver performance.

BACKGROUND

In recent years, graphs have been used to represent and/or otherwise model relationships, such as relationships in biological processes, social processes, information processes, etc. Real world scenarios may be defined through the use of graphs and graph theory to represent attributes with nodes and edges. When such real world scenarios are represented with graphs, one or more relationships and/or conclusions may be determined that are not readily recognized in pure mathematical form.

BRIEF DESCRIPTION OF THE DRAWINGS

FIG. 1 is a schematic illustration of an example hybrid pipeline framework to improve algorithmic solver performance.
FIG. 2 is a schematic illustration of an example graph modeling environment including an example graph modeler to implement the example hybrid pipeline framework of FIG. 1 to improve algorithmic solver performance.
FIG. 3 is a schematic illustration of an example classifier structure generated by the example graph modeler of FIG. 2.
FIGS. 4 and 5 are flowcharts representative of example machine readable instructions that may be executed by example processor circuitry to implement the example hybrid pipeline of FIG. 1 and/or the example graph modeler of FIG. 2.
FIG. 6 is a block diagram of an example processing platform including processor circuitry structured to execute the example machine readable instructions of FIGS. 4 and 5 to implement the example hybrid pipeline 100 of FIG. 1.
FIG. 7 is a block diagram of an example implementation of the processor circuitry of FIG. 6.
FIG. 8 is a block diagram of another example implementation of the processor circuitry of FIG. 6.
FIG. 9 is a block diagram of an example software distribution platform (e.g., one or more servers) to distribute software (e.g., software corresponding to the example machine readable instructions of FIGS. 4 and/or 5) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

The figures are not to scale. Instead, the thickness of the layers or regions may be enlarged in the drawings. Although the figures show layers and regions with clean lines and boundaries, some or all of these lines and/or boundaries may be idealized. In reality, the boundaries and/or lines may be unobservable, blended, and/or irregular. In general, the same reference numbers will be used throughout the drawing(s) and accompanying written description to refer to the same or like parts. As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another. As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween. As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.
Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly that might, for example, otherwise share a same name. As used herein, "approximately" and "about" refer to dimensions that may not be exact due to manufacturing tolerances and/or other real world imperfections. As used herein "substantially real time" refers to occurrence in a near instantaneous manner recognizing there may be real world delays for computing time, transmission, etc. Thus, unless otherwise specified, "substantially real time" refers to real time +/- 1 second. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events. As used herein, "processor circuitry" is defined to include (i) one or more special purpose electrical circuits structured to perform specific operation(s) and including one or more semiconductor-based logic devices (e.g., electrical hardware implemented by one or more transistors), and/or (ii) one or more general purpose semiconductor-based electrical circuits programmed with instructions to perform specific operations and including one or more semiconductor-based logic devices (e.g., electrical hardware implemented by one or more transistors). Examples of processor circuitry include programmed microprocessors, Field Programmable Gate Arrays (FPGAs) that may instantiate instructions, Central Processor Units (CPUs), Graphics Processor Units (GPUs), Digital Signal Processors (DSPs), XPUs, or microcontrollers and integrated circuits such as Application Specific Integrated Circuits (ASICs). For example, an XPU may be implemented by a heterogeneous computing system including multiple types of processor circuitry (e.g., one or more FPGAs, one or more CPUs, one or more GPUs, one or more DSPs, etc., and/or a combination thereof) and application programming interface(s) (API(s)) that may assign computing task(s) to whichever one(s) of the multiple types of the processing circuitry is/are best suited to execute the computing task(s).

DETAILED DESCRIPTION

Non-deterministic problems, such as non-deterministic polynomial (NP)-hard problems, typically rely on heuristics to reach a solution. In addition to relatively high computational resources required for heuristic approaches to NP problems, such approaches also consume relatively long periods of time and suffer from error due to human discretion that naturally accompanies heuristic approaches. As used herein, relatively long periods of time refer to particular periods of time that are deemed impractical to be performed by a human with pen and paper, and generally deemed impractical in view of expectations by persons having ordinary skill in the art when solutions are attempted with traditional techniques and computational resources (e.g., central processing units (CPUs), graphical processing units (GPUs), field programmable gate arrays (FPGAs), etc.).

Previous state of the art solutions to solve graph problems typically utilize heuristic approaches when applying solver algorithms. Examples disclosed herein consider a desired problem to be solved corresponding to identifying a maximal independent set (MIS), but examples disclosed herein are not limited thereto. Applied heuristics select inputs to be used with classic compute algorithms (e.g., an asynchronous parallel MIS algorithm) that seek to determine whether an input is representative of, for instance, a maximal set. However, such approaches rely on discretionary choices by "experts" and/or "professionals," which are not statistically repeatable approaches. As such, because the heuristic approaches apply a degree of guesswork at input values for the classic compute algorithms (e.g., asynchronous parallel MIS algorithms), solutions require a substantial amount of computing time and/or computing resources. As graphs become larger and/or more complex, such heuristic approaches do not scale well and require greater amounts of computing resources.

Examples disclosed herein invoke a hybrid approach that includes both Deep learning (DL) components and differentiable learnable graph embedding components followed by post-processing components, all of which form a pipeline that takes a graph as an input with its features. The example pipeline disclosed herein emits labels for each node of the input graph. The example labels represent a predicted probability of a given node to belong to an objective corresponding to a particular graph embedding component (e.g., algorithms chartered to identify a maximal independent set (MIS) will have labels generated that identify a probability that a particular set is indicative of MIS). As such, results from algorithmic solvers (e.g., maximal independent set solvers) produce results faster than traditional brute force techniques and/or heuristic approaches that rely on potentially erroneous human discretion.

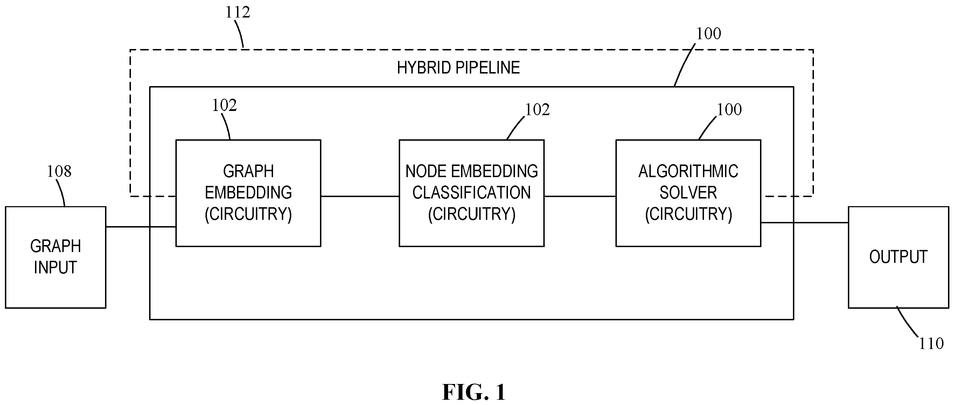

FIG. 1 illustrates an example hybrid pipeline framework 100 to perform graph modeling. In the illustrated example of FIG. 1, the hybrid pipeline framework 100 includes an example trainable graph embedding stage 102, an example trainable node embedding classifier stage 104 (e.g., node embedding classification instructions) and an example algorithmic solver stage 106. The example hybrid pipeline framework 100 receives, retrieves and/or otherwise obtains input 108 in the form of one or more graphs.

In operation, and as described in further detail below, the example hybrid pipeline framework 100 invokes the example graph trainable embedding stage 102 to perform graph to vector embedding. Generally speaking, graphs represent any type of structure, process, event and/or problem as nodes having characteristics. Some nodes are represented as having relationships to other nodes via an edge, in which some nodes include any number of edges to the other nodes. For example, the social media industry utilizes graphs and/or graph theory to model relationships of their users, in which each user is represented as a node. A first user, for instance, represented as a first node may be related to a second user represented as a second node via an edge because the first and second users are identified as friends, co-workers, family members, etc. The first and/or second users may also be related to any number of alternate and/or additional nodes based on respective characteristics.

The example graph embedding phase 102 transforms the graphs with its node attributes into one or more vector representations as an output, which are an input to the example node embedding classifier phase 104. The example node embedding classifier phase 104 invokes one or more machine learning algorithms and/or techniques to generate probabilistic values corresponding to the node classes of the example graph input 108. In some examples, the node embedding classifier phase 104 employs loss and/or reward functions that are based on a particular problem to be solved, such as the objective problems to be solved by the algorithmic solver phase 106. While the example trainable graph embedding phase 102 and the example trainable node embedding classifier phase 104 employ machine learning in an effort to learn the solutions corresponding to the algorithmic solver phase 106, their corresponding outputs are used as an input to the algorithmic solver phase 106 as a guide in an effort to improve calculation efficiency and reduce an amount of time required to derive a solution(s). Stated differently, traditional techniques typically attempted to tailor inputs from graph input data 108 to the algorithmic solver phase 106 based on heuristics. At least one problem with this approach is that the heuristics might be suitable for a first type of graph or class of graphs, but completely ineffective or counterproductive for a second type of graph. As such, these techniques require a relatively high number of iterative attempts to generate the best solution. Unlike such brute force heuristic approaches, examples disclosed herein generate an array of vectors having respective probability values indicative of a likelihood that corresponding vector characteristics are relevant to the problem to be solved by the example algorithmic solver phase 106.

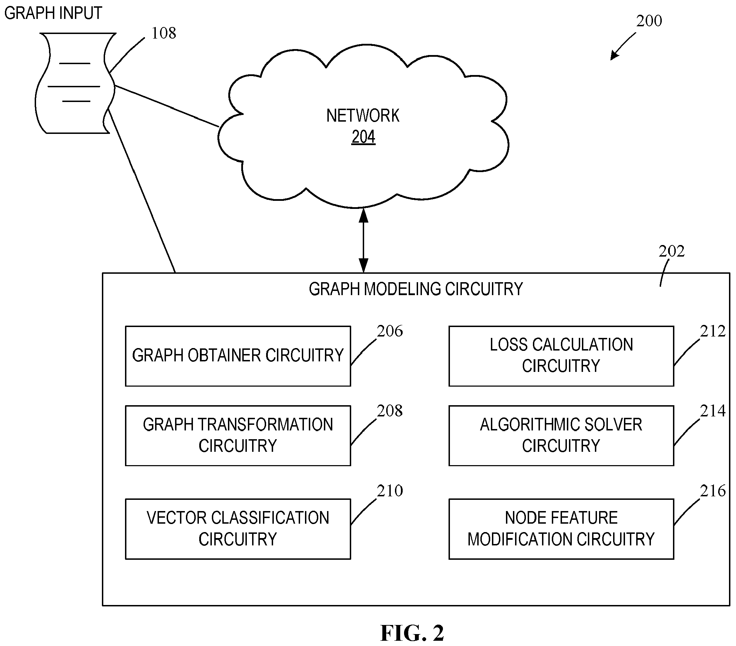

FIG. 2 is an example graph modeling environment 200 including an example graph modeling circuitry 202. The example graph modeling circuitry 202 is a structural representation of the example hybrid pipeline framework 100 of FIG. 1. In the illustrated example of FIG. 2, the graph modeling environment 200 includes the graph modeling circuitry 202 communicatively connected to an example network 204, which is communicatively connected to the graph input data 108. In some examples, the graph input data 108 is directly connected to the example graph modeling circuitry 202 and/or, in some examples, the graph input data 108 is stored in a storage device and/or memory. In the illustrated example of FIG. 2, the graph modeling circuitry 202 includes example graph obtainer circuitry 206, which may serve as an interface (e.g., a web server, a graphical user interface (GUI)) to the example graph input data 108 (e.g., via a direct connection and/or via the example network 204).

In the illustrated example of FIG. 2, the graph modeling circuitry 202 includes an example graph transformation circuitry 208, example vector classification circuitry 210, example loss calculation circuitry 212, an example algorithmic solver circuitry 214, and an example node feature modification circuitry 216. In operation, the example graph obtainer circuitry 206 determines whether graph input data 108 is available to be processed. If so, the example graph transformation circuitry 208 transforms the input graph data 108 into a vector representation. In some examples, the graph transformation circuitry 208 transforms graph nodes, edges and corresponding characteristics (features) into an alternate dimensional vector space (e.g., a relatively lower vector space). In some examples, the graph transformation circuitry 208 performs such transformations while preserving all of the original graph information, topology and node properties, but in a vector format that is more readily received and/or otherwise digested by machine learning algorithms. In some examples, the graph transformation circuitry 208 invokes a Node2Vec algorithm or a DeepWalk algorithm to perform the transformations, but other examples are possible. In some examples, the graph transformation circuitry 208 invokes a Structure2Vec algorithm as a deep learning differentiable embedding methodology, which is capable of representing complex information such as, but not limited to complicated graph statistics, global/local degree distribution information, triangle counts and/or distances between nodes. As described in further detail below, this differentiable embedding employs backpropagation to update (e.g., learn) weights of an embedding model with supervised signals corresponding to the discriminative problem(s) to be solved by the algorithmic solver 106. This trainable embedding further improves the efficacy of the probabilistic values from the node classification circuitry.

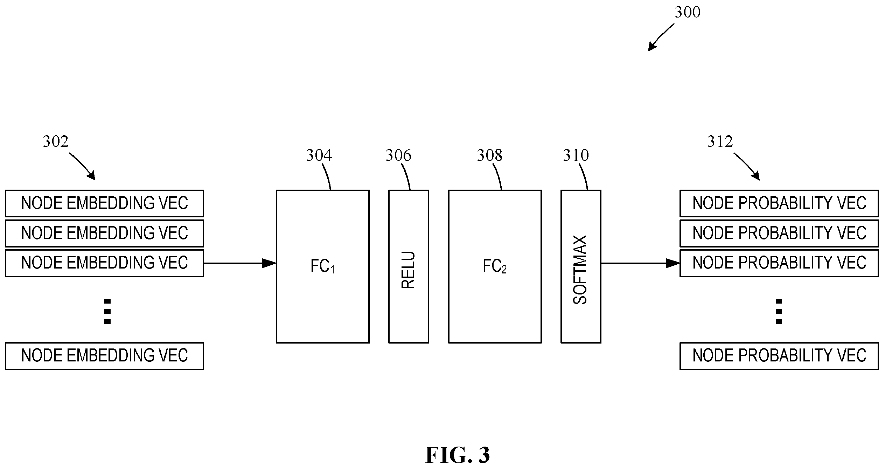

The example vector classification circuitry 210 classifies vectors corresponding to the newly formed vector representations of the graph input data 108. In particular, the example vector classification circuitry 210 generates and/or otherwise invokes a classifier structure, such as an example multi-layer perceptron (MLP). Briefly turning to FIG. 3, an architectural representation of an example node embedding classifier 300 is shown. In the illustrated example of FIG. 3, the node embedding classifier 300 includes the newly generated vector representations 302 as an input to a first connected layer 304. The example first connected layer 304 is connected to a rectified linear unit (ReLU) 306 and a second connected layer 308. To ensure outputs from the second connected layer 308 fall into a desired range of interest (e.g., values between 0 and 1), an example softmax engine 310 is invoked, and the example node embedding classifier 300 produces node probability vectors 312 as output. The example node embedding classifier 300 may be represented in a manner consistent with example Equation 1.

$$f(\mu_v, \theta) \leftarrow \phi_{softmax}(\theta_2 \, RLU(\theta_1 \mu_v))$$

$$\theta = \{\theta_1; \theta_2\}$$

Equation 1.

In the illustrated example of Equation 1, the output of the last layer is softmaxed along a class dimension such that the output values for each class for node v fall within a range of zero to one, and those outputs sum up to one for each node of interest. The specific structure of the node classifier is not limited to MLP, a deep learning classifier of arbitrary size (in terms of number of trainable parameters) and topology can be used.

Considering for this example that the algorithmic solver phase 106 is focused on a problem corresponding to identifying a maximal independent set (MIS), one particular challenge is that for a given graph there might be two or more equivalent optimal solutions. Using traditional approaches, like heuristics and standard output and loss mechanisms, effective network learning cannot occur because the network behaves in a confused manner when there are multiple equivalent optimal solutions. Without a tailored design, the example network 300 may produce labels that are in between such optimums, which does not yield a useful or accurate solution. To mitigate an undesirable mixing of independent solutions, the example loss calculating circuitry employs multiple output maps and a hindsight loss function.

In particular, the example loss calculation circuitry 212 tailors the example network 300 in a manner consistent with example Equation 2.

$$L(u_{i=1..batch}, \theta) = \sum_i min_m \, \phi_{cross_{entropy}}\left(l^i, f^m(u_i, \theta)\right)$$

Equation 2.

In the illustrated example of Equation 2, given an input embedding $u_v$, the network generates M probability maps: $f^1(\mu, \Theta)$, ..., $f^M(\mu, \Theta)$. To train the model and optimize model parameters $(\Theta)$, example Equation 2 is used and/or otherwise invoked by the loss calculation circuitry 212 as a hindsight loss function. The example hindsight loss function (invoked by the example loss calculation circuitry 212) incentivizes maintenance of diversity in the output maps $M$ by picking an output map that has minimum loss error with respect to target labels $l^i$. The example model parameters $(\Theta)$ are updated by the example loss calculation circuitry 212 according to the minimum loss error across multiple output maps M for a given sample graph. The updates to the network weights are calculated on a most accurate (relative) output map. As such, the example node embedding classifier phase 104 translates information from the graph nodes into leaned embedding vectors, and deep learning techniques further translate those node representations back into (in this example) normalized MIS-specific probability values.

Returning to the illustrated example of FIG. 2, the example algorithmic solver circuitry 214 selects an algorithmic solver of interest. As described above, examples disclosed herein apply a hybrid approach to solving complex algorithmic problems using a pipeline having both machine learning and non-machine learning techniques. While examples disclosed herein include solving problems associated with determination of a maximal independent set of a graph, examples are not limited thereto. The example algorithmic solver circuitry 214 provides output from the vector classification to a selected algorithmic solver of interest to, during runtime or inference phases of the pipeline 100, generate solutions as output data 110. However, in circumstances where the example hybrid pipeline 100 is used for training, the example output data 110 is employed during backpropagation 112 to develop one or more models that yield improved inputs for the example algorithmic solver phase 106.

Generally speaking, while generated probabilities from ML efforts help to generate improved inputs for algorithmic label predictions, such probabilities themselves are insufficient for accurate solutions based on labels. ML predictions rely on statistical patterns found in the training data, so label predictions are statistically constrained. As such, raw output predictions from ML techniques typically do not represent a consistent solution to some complex algorithmic problems, such as maximal independent set determinations. In some examples, the vector classification circuitry 210 performs post-processing based on a greedy labeling strategy in which vertex probabilities are used as priority values (labels) that indicate inclusion or exclusion for the algorithmic task at hand (e.g., maximal independent set).

In some examples, particularly when the example pipeline is invoked for training, the example node feature modification circuitry 216 configures the model with a hidden state vector size of 256 for both the first fully connected layer 304 and the second fully connected layer 308, and a latent vector size of 64. In some examples, the graph modeling circuitry 202 uses a solver to generate training data for supervised learning, and results are compared with a simple greedy approach on graphs, such as graphs with nodes of 100-150 and edges of 160-300. However, other quantities of nodes and edges are consistent with examples disclosed herein.

In some examples the node feature modification circuitry 216 improves accuracy of the modeling effort by including one or more features (e.g., additional features that were not originally defined in input graph data). The example node feature modification circuitry 216 calculates and attaches features as vectors on respective graph nodes. Features (e.g., float values) include, but are not limited to a node degree, a Hirsh-like index (e.g., if $H\_index(n)$ = x, then the node $n$ has at least x neighbors of degree x), clustering coefficients, a number of neighboring leaves, a number of small neighbors, or a sum of neighbor degrees. With the addition of node features, examples disclosed herein cause statistics of the greedy approach to improve, thereby producing models that cause solutions to be achieved in relatively less time with relatively less processing power when compared to traditional techniques.

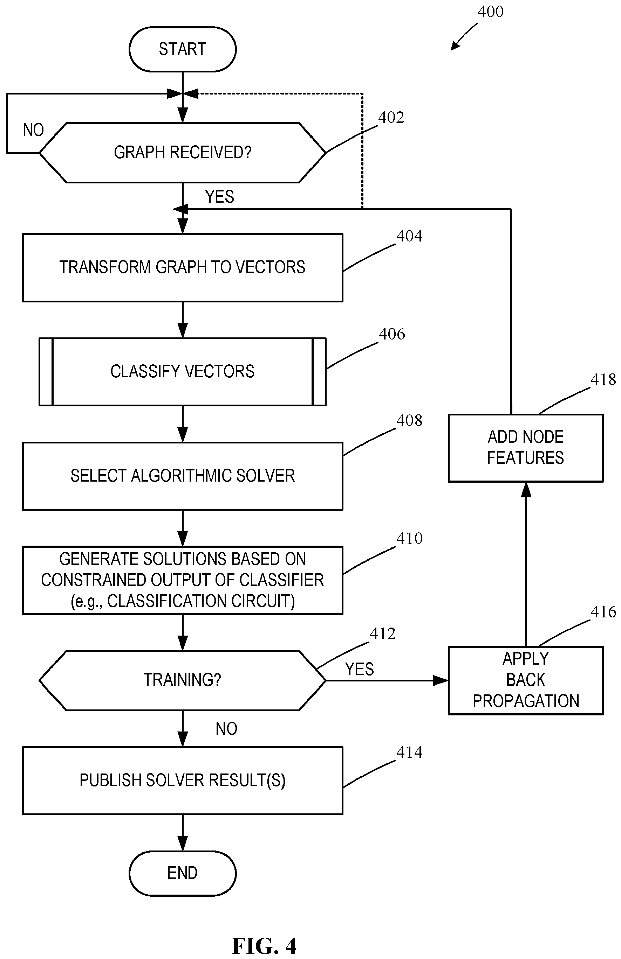

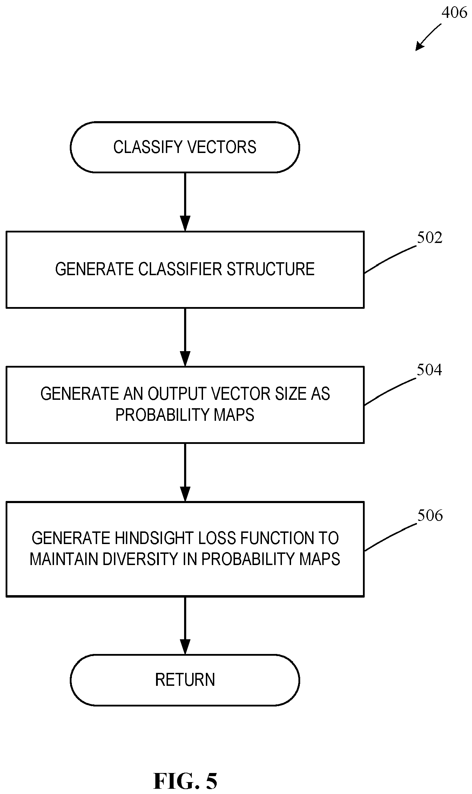

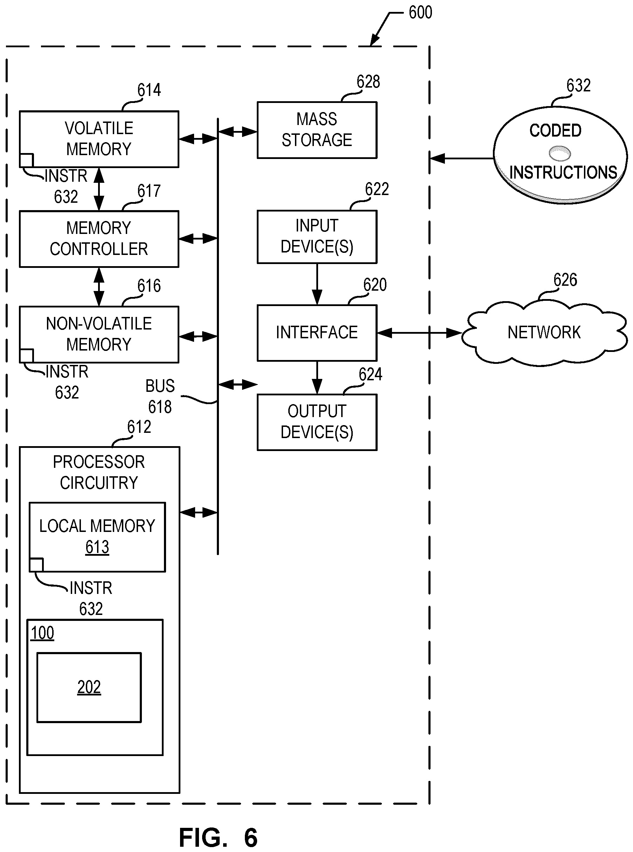

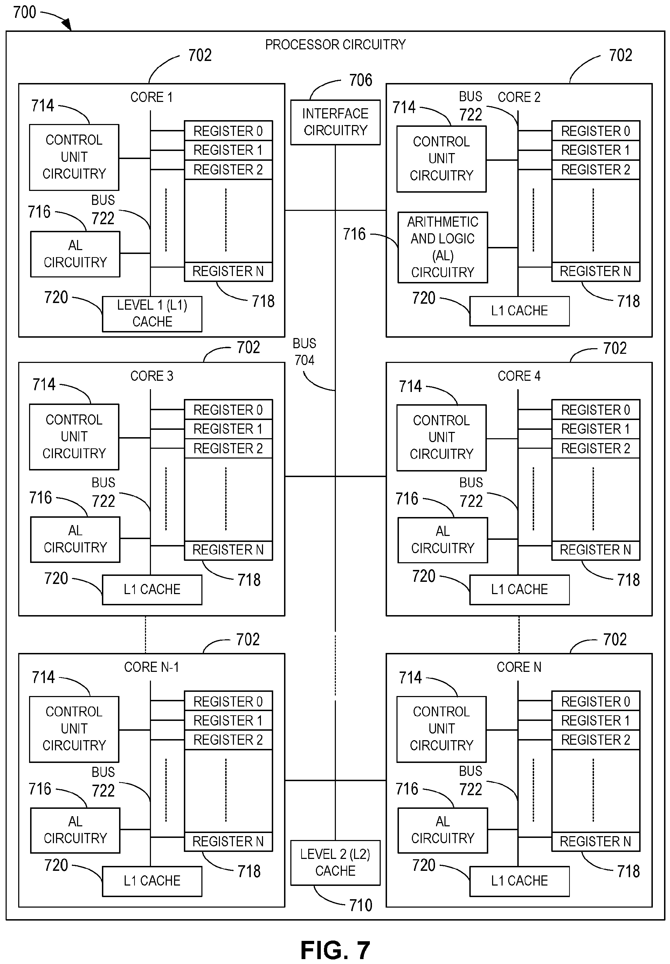

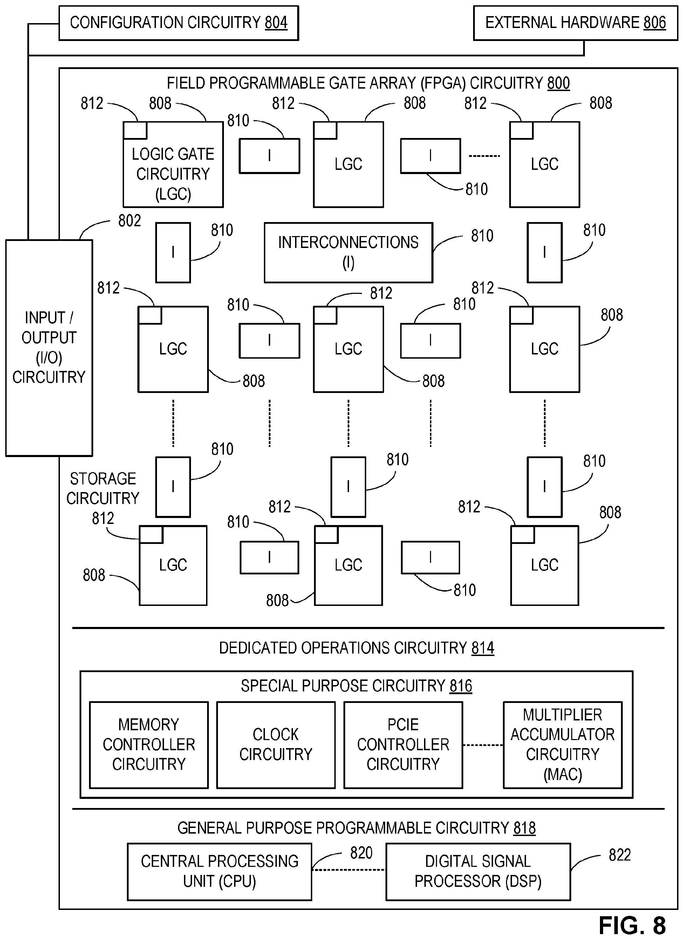

In some examples, the graph obtainer circuitry 206 includes means for obtaining a graph, the graph transformation circuitry 208 includes means for transforming a graph, the vector classification circuitry 210 includes means for classifying a vector, the loss calculation circuitry 212 includes means for calculating a loss, the algorithmic solver circuitry 214 includes means for solving a problem with an compute algorithm approach, and the node feature modification circuitry 216 includes means for modifying node features. For example, the means for obtaining a graph may be implemented by graph obtainer circuitry 206, the means for transforming a graph may be implemented by graph transformation circuitry 208, the means for classifying a vector may be implemented by vector classifier classification circuitry 210, the means for calculating a loss may be implemented by loss calculation circuitry 212, the means for solving an algorithm may be implemented by algorithmic solver circuitry 214, and the means for modifying node features may be implemented by node feature modification circuitry 216. In some examples, the graph obtainer circuitry 206 may be implemented by machine executable instructions such as that implemented by at least block 402 of FIG. 4 executed by processor circuitry, which may be implemented by the example processor circuitry 612 of FIG. 6, the example processor circuitry 700 of FIG. 7, and/or the example Field Programmable Gate Array (FPGA) circuitry_800 of FIG. 8. In some examples, the graph obtainer circuitry 206 may be implemented by machine executable instructions such as that implemented by at least blocks 404 of FIG. 4 executed by processor circuitry, which may be implemented by the example processor circuitry 612 of FIG. 6, the example processor circuitry 700 of FIG. 7, and/or the example FPGA circuitry 800 of FIG. 8. In some examples, vector classification circuitry 210 may be implemented by machine executable instructions such as that implemented by at least blocks 406, 416, 502 and 504 of FIGS. 4 and 5 executed by processor circuitry, which may be implemented by the example processor circuitry 612 of FIG. 6, the example processor circuitry 700 of FIG. 7, and/or the example FPGA circuitry 800 of FIG. 8. In some examples, the loss calculation circuitry 212 may be implemented by machine executable instructions such as that implemented by at least blocks 506 of FIG. 5 executed by processor circuitry, which may be implemented by the example processor circuitry 612 of FIG. 6, the example processor circuitry 700 of FIG. 7, and/or the example FPGA circuitry 800 of FIG. 8. In some examples, the algorithmic solver circuitry 214 may be implemented by machine executable instructions such as that implemented by at least blocks 408 and 410 of FIG. 4 executed by processor circuitry, which may be implemented by the example processor circuitry 612 of FIG. 6, the example processor circuitry 700 of FIG. 7, and/or the example FPGA circuitry 800 of FIG. 8. In some examples, the node feature modification circuitry 216 may be implemented by machine executable instructions such as that implemented by at least blocks 418 of FIG. 4 executed by processor circuitry, which may be implemented by the example processor circuitry 612 of FIG. 6, the example processor circuitry 700 of FIG. 7, and/or the example FPGA circuitry 800 of FIG. 8. In other examples, the graph obtainer circuitry 206, the graph transformation circuitry 208, the vector classification circuitry 210, the loss calculation circuitry 212, the algorithmic solver circuitry 214, and the node feature modification circuitry 216 is implemented by other hardware logic circuitry, hardware implemented state machines, and/or any other combination of hardware, software, and/or firmware. For example, the graph obtainer circuitry 206, the graph transformation circuitry 208, the vector classification circuitry 210, the loss calculation circuitry 212, the algorithmic solver circuitry 214, and/or the node feature modification circuitry 216 may be implemented by at least one or more hardware circuits (e.g., processor circuitry, discrete and/or integrated analog and/or digital circuitry, an FPGA, an Application Specific Integrated Circuit (ASIC), a comparator, an operational-amplifier (op-amp), a logic circuit, etc.) structured to perform the corresponding operation without executing software or firmware, but other structures are likewise appropriate.

While an example manner of implementing the hybrid pipeline 100 of FIG. 1 is illustrated in FIGS. 2 and 3, one or more of the elements, processes, and/or devices illustrated in FIGS. 1-3 may be combined, divided, re-arranged, omitted, eliminated, and/or implemented in any other way. Further, the example graph obtainer circuitry 206, the example graph transformation circuitry 208, the example vector classification circuitry 210, the example loss calculation circuitry 212, the example algorithmic solver circuitry 214, the example node feature modification circuitry 216 and/or, more generally, the example graph modeling circuitry 202 of FIGS. 1-3, may be implemented by hardware, software, firmware, and/or any combination of hardware, software, and/or firmware. Thus, for example, any of the example graph obtainer circuitry 206, the example graph transformation circuitry 208, the example vector classification circuitry 210, the example loss calculation circuitry 212, the example algorithmic solver circuitry 214, the example node feature modification circuitry 216 and/or, more generally, the example graph modeling circuitry 202, could be implemented by processor circuitry, analog circuit(s), digital circuit(s), logic circuit(s), programmable processor(s), programmable microcontroller(s), graphics processing unit(s) (GPU(s)), digital signal processor(s) (DSP(s)), application specific integrated circuit(s) (ASIC(s)), programmable logic device(s) (PLD(s)), and/or field programmable logic device(s) (FPLD(s)) such as Field Programmable Gate Arrays (FPGAs). When reading any of the apparatus or system claims of this patent to cover a purely software and/or firmware implementation, at least one of the example graph obtainer circuitry 206, the example graph transformation circuitry 208, the example vector classification circuitry 210, the example loss calculation circuitry 212, the example algorithmic solver circuitry 214, the example node feature modification circuitry 216 and/or, more generally, the example graph modeling circuitry 202 is/are hereby expressly defined to include a non-transitory computer readable storage device or storage disk such as a memory, a digital versatile disk (DVD), a compact disk (CD), a Blu-ray disk, etc., including the software and/or firmware. Further still, the example hybrid pipeline 100 of FIG. 1 and/or the example graph modeling circuitry 202 of FIG. 2 may include one or more elements, processes, and/or devices in addition to, or instead of, those illustrated in FIGS. 1-3, and/or may include more than one of any or all of the illustrated elements, processes and devices.

Flowcharts representative of example hardware logic circuitry, machine readable instructions, hardware implemented state machines, and/or any combination thereof for implementing the hybrid pipeline 100 and/or the graph modeling circuitry 202 of FIGS. 1 and 2 is shown in FIGS. 4 and 5. The machine readable instructions may be one or more executable programs or portion(s) of an executable program for execution by processor circuitry, such as the processor circuitry 612 shown in the example processor platform 600 discussed below in connection with FIG. 6 and/or the example processor circuitry discussed below in connection with FIGS. 7 and/or 8. The program may be embodied in software stored on one or more non-transitory computer readable storage media such as a CD, a floppy disk, a hard disk drive (HDD), a DVD, a Blu-ray disk, a volatile memory (e.g., Random Access Memory (RAM) of any type, etc.), or a non-volatile memory (e.g., FLASH memory, an HDD, etc.) associated with processor circuitry located in one or more hardware devices, but the entire program and/or parts thereof could alternatively be executed by one or more hardware devices other than the processor circuitry and/or embodied in firmware or dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a user) or an intermediate client hardware device (e.g., a radio access network (RAN) gateway that may facilitate communication between a server and an endpoint client hardware device). Similarly, the non-transitory computer readable storage media may include one or more mediums located in one or more hardware devices. Further, although the example program is described with reference to the flowchart illustrated in FIGS. 4 and 5, many other methods of implementing the example hybrid pipeline 100 and/or the example graph modeling circuitry 202 may alternatively be used. For example, the order of execution of the blocks may be changed, and/or some of the blocks described may be changed, eliminated, or combined. Additionally or alternatively, any or all of the blocks may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The processor circuitry may be distributed in different network locations and/or local to one or more hardware devices (e.g., a single-core processor (e.g., a single core central processor unit (CPU)), a multi-core processor (e.g., a multi-core CPU), etc.) in a single machine, multiple processors distributed across multiple servers of a server rack, multiple processors distributed across one or more server racks, a CPU and/or a FPGA located in the same package (e.g., the same integrated circuit (IC) package or in two or more separate housings, etc).

The machine readable instructions described herein may be stored in one or more of a compressed format, an encrypted format, a fragmented format, a compiled format, an executable format, a packaged format, etc. Machine readable instructions as described herein may be stored as data or a data structure (e.g., as portions of instructions, code, representations of code, etc.) that may be utilized to create, manufacture, and/or produce machine executable instructions. For example, the machine readable instructions may be fragmented and stored on one or more storage devices and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of machine executable instructions that implement one or more operations that may together form a program such as that described herein.

In another example, the machine readable instructions may be stored in a state in which they may be read by processor circuitry, but require addition of a library (e.g., a dynamic link library (DLL)), a software development kit (SDK), an application programming interface (API), etc., in order to execute the machine readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable media, as used herein, may include machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 4 and 5 may be implemented using executable instructions (e.g., computer and/or machine readable instructions) stored on one or more non-transitory computer and/or machine readable media such as optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms non-transitory computer readable medium and non-transitory computer readable storage medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements or method actions may be implemented by, e.g., the same entity or object. Additionally, although individual features may be included in different examples or claims, these may possibly be combined, and the inclusion in different examples or claims does not imply that a combination of features is not feasible and/or advantageous.

FIG. 4 is a flowchart representative of example machine readable instructions and/or example operations 400 that may be executed and/or instantiated by processor circuitry to determine solver results. The machine readable instructions and/or operations 400 of FIG. 4 begin at block 402, at which the graph obtainer circuitry 206 retrieves, receives and/or otherwise obtains at least one graph of interest. In some examples, one or more graphs are stored in a data storage device, such as a database or hard disk drive. In some examples, one or more graphs are obtained via a graphical user interface and/or web server facilitated by the example graph obtainer circuitry 206. In response to obtaining a graph of interest (block 402), the example graph transformation circuitry 208 transforms the obtained graph into a vector representation (block 404).

The example vector classification circuitry 210 classifies the vector representation (block 406), as described in further detail in connection with FIG. 5. In the illustrated example of FIG. 5, the vector classification circuitry 210 generates a classifier structure (block 502). As described above, the example node embedding classifier 300 is one example of a classifier generated by the example vector classification circuitry 210. The example vector classification circuitry 210 invokes, applies and/or otherwise uses the generated classifier structure to generate a plurality of probability maps (block 504), and the example loss calculation circuitry 212 generates a hindsight loss function to maintain a degree of diversity in the probability maps (block 506). As described above, the example loss calculation circuitry 212 generates the example hindsight loss function in a manner consistent with example Equation 2.

Returning to the illustrated example of FIG. 4, the algorithmic solver circuitry 214 selects (e.g., receives, retrieves and/or otherwise obtains) an algorithmic solver (e.g., a graph algorithm having a particular task) of interest (block 408). As described above, examples disclosed herein facilitate solution generation of any type of graph algorithm, such as the maximal independent set (block 410). The example algorithmic solver circuitry 214 applies the probability values to the selected graph algorithm to generate corresponding solutions. In some examples, the vector classification circuitry 210 ranks the probability vector output values based on their respective magnitudes (e.g., probability values between a range of 0 and 1). As such, the example algorithmic solver circuitry 214 applies only a portion of the probability values, which correspond to respective graph nodes and their corresponding characteristics, to generate solutions. Stated differently, rather than traditional approaches of heuristic attempts at particular nodes, node pairs and their corresponding characteristics, examples disclosed herein apply only that node information deemed most relevant to a likely solution, such as a quantity of 64 of the most relevant probabilities (which correspond to 64 of the most relevant nodes from the input graph). Having 64 likely variants of the possible solutions allows to rank them and further improve the quality of the best solution.

If the example graph modeling circuitry 202 determines that the example hybrid pipeline 100 is operating as an inference device or an inference mode (e.g., during runtime) (block 412), then the solver results are published and/or otherwise provided as output (block 414). If the example graph modeling circuitry 202 determines that the example hybrid pipeline 100 is operating as a training device or in a training mode (block 412), then the example vector classification circuitry 210 applies backpropagation 112 to the pipeline 100 (block 416). Additionally, in an effort to improve accuracy of a model (to generate probability values corresponding to the input graph nodes/data), the example node feature modification circuitry 216 adds one or more node features and/or node data to the input graph nodes (block 418).

FIG. 6 is a block diagram of an example processor platform 600 structured to execute and/or instantiate the machine readable instructions and/or operations of FIGS. 4 and/or 5 to implement the hybrid pipeline 100 and/or the graph modeling circuitry 202 of FIGS. 1 and 2. The processor platform 600 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a gaming console, a personal video recorder, a set top box, a headset (e.g., an augmented reality (AR) headset, a virtual reality (VR) headset, etc.) or other wearable device, or any other type of computing device.

The processor platform 600 of the illustrated example includes processor circuitry 612. The processor circuitry 612 of the illustrated example is hardware. For example, the processor circuitry 612 can be implemented by one or more integrated circuits, logic circuits, FPGAs microprocessors, CPUs, GPUs, DSPs, and/or microcontrollers from any desired family or manufacturer. The processor circuitry 612 may be implemented by one or more semiconductor based (e.g., silicon based) devices. In this example, the processor circuitry 612 implements the hybrid pipeline 100, the graph modeling circuitry 202 and structure contained therein.

The processor circuitry 612 of the illustrated example includes a local memory 613 (e.g., a cache, registers, etc.). The processor circuitry 612 of the illustrated example is in communication with a main memory including a volatile memory 614 and a non-volatile memory 616 by a bus 618. The volatile memory 614 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 616 may be implemented by flash memory and/or any other desired type of memory device. Access to the main memory 614, 616 of the illustrated example is controlled by a memory controller 617.

The processor platform 600 of the illustrated example also includes interface circuitry 620. The interface circuitry 620 may be implemented by hardware in accordance with any type of interface standard, such as an Ethernet interface, a universal serial bus (USB) interface, a Bluetooth® interface, a near field communication (NFC) interface, a PCI interface, and/or a PCIe interface.

In the illustrated example, one or more input devices 622 are connected to the interface circuitry 620. The input device(s) 622 permit(s) a user to enter data and/or commands into the processor circuitry 612. The input device(s) 622 can be implemented by, for example, an audio sensor, a microphone, a camera (still or video), a keyboard, a button, a mouse, a touchscreen, a track-pad, a trackball, an isopoint device, and/or a voice recognition system.

One or more output devices 624 are also connected to the interface circuitry 620 of the illustrated example. The output devices 624 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 620 of the illustrated example, thus, typically includes a graphics driver card, a graphics driver chip, and/or graphics processor circuitry such as a GPU.

The interface circuitry 620 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 626. The communication can be by, for example, an Ethernet connection, a digital subscriber line (DSL) connection, a telephone line connection, a coaxial cable system, a satellite system, a line-of-site wireless system, a cellular telephone system, an optical connection, etc.

The processor platform 600 of the illustrated example also includes one or more mass storage devices 628 to store software and/or data. Examples of such mass storage devices 628 include magnetic storage devices, optical storage devices, floppy disk drives, HDDs, CDs, Blu-ray disk drives, redundant array of independent disks (RAID) systems, solid state storage devices such as flash memory devices, and DVD drives.

The machine executable instructions 632, which may be implemented by the machine readable instructions of FIGS. 4 and/or 5, may be stored in the mass storage device 628, in the volatile memory 614, in the non-volatile memory 616, and/or on a removable non-transitory computer readable storage medium such as a CD or DVD.

FIG. 7 is a block diagram of an example implementation of the processor circuitry 612 of FIG. 6. In this example, the processor circuitry 612 of FIG. 6 is implemented by a microprocessor 700. For example, the microprocessor 700 may implement multi-core hardware circuitry such as a CPU, a DSP, a GPU, an XPU, etc. Although it may include any number of example cores 702 (e.g., 1 core), the microprocessor 700 of this example is a multi-core semiconductor device including N cores. The cores 702 of the microprocessor 700 may operate independently or may cooperate to execute machine readable instructions. For example, machine code corresponding to a firmware program, an embedded software program, or a software program may be executed by one of the cores 702 or may be executed by multiple ones of the cores 702 at the same or different times. In some examples, the machine code corresponding to the firmware program, the embedded software program, or the software program is split into threads and executed in parallel by two or more of the cores 702. The software program may correspond to a portion or all of the machine readable instructions and/or operations represented by the flowcharts of FIG. 4 and/or 5.

The cores 702 may communicate by an example bus 704. In some examples, the bus 704 may implement a communication bus to effectuate communication associated with one(s) of the cores 702. For example, the bus 704 may implement at least one of an Inter-Integrated Circuit (I2C) bus, a Serial Peripheral Interface (SPI) bus, a PCI bus, or a PCIe bus. Additionally or alternatively, the bus 704 may implement any other type of computing or electrical bus. The cores 702 may obtain data, instructions, and/or signals from one or more external devices by example interface circuitry 706. The cores 702 may output data, instructions, and/or signals to the one or more external devices by the interface circuitry 706. Although the cores 702 of this example include example local memory 720 (e.g., Level 1 (L1) cache that may be split into an L1 data cache and an L1 instruction cache), the microprocessor 700 also includes example shared memory 710 that may be shared by the cores (e.g., Level 2 (L2_ cache)) for high-speed access to data and/or instructions. Data and/or instructions may be transferred (e.g., shared) by writing to and/or reading from the shared memory 710. The local memory 720 of each of the cores 702 and the shared memory 710 may be part of a hierarchy of storage devices including multiple levels of cache memory and the main memory (e.g., the main memory 614, 616 of FIG. 6). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 702 may be referred to as a CPU, DSP, GPU, etc., or any other type of hardware circuitry. Each core 702 includes control unit circuitry 714, arithmetic and logic (AL) circuitry (sometimes referred to as an ALU) 716, a plurality of registers 718, the L1 cache 720, and an example bus 722. Other structures may be present. For example, each core 702 may include vector unit circuitry, single instruction multiple data (SIMD) unit circuitry, load/store unit (LSU) circuitry, branch/jump unit circuitry, floating-point unit (FPU) circuitry, etc. The control unit circuitry 714 includes semiconductor-based circuits structured to control (e.g., coordinate) data movement within the corresponding core 702. The AL circuitry 716 includes semiconductor-based circuits structured to perform one or more mathematic and/or logic operations on the data within the corresponding core 702. The AL circuitry 716 of some examples performs integer based operations. In other examples, the AL circuitry 716 also performs floating point operations. In yet other examples, the AL circuitry 716 may include first AL circuitry that performs integer based operations and second AL circuitry that performs floating point operations. In some examples, the AL circuitry 716 may be referred to as an Arithmetic Logic Unit (ALU). The registers 718 are semiconductor-based structures to store data and/or instructions such as results of one or more of the operations performed by the AL circuitry 716 of the corresponding core 702. For example, the registers 718 may include vector register(s), SIMD register(s), general purpose register(s), flag register(s), segment register(s), machine specific register(s), instruction pointer register(s), control register(s), debug register(s), memory management register(s), machine check register(s), etc. The registers 718 may be arranged in a bank as shown in FIG. 7. Alternatively, the registers 718 may be organized in any other arrangement, format, or structure including distributed throughout the core 702 to shorten access time. The bus 720 may implement at least one of an I2C bus, a SPI bus, a PCI bus, or a PCIe bus.

Each core 702 and/or, more generally, the microprocessor 700 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 700 is a semiconductor device fabricated to include many transistors interconnected to implement the structures described above in one or more integrated circuits (ICs) contained in one or more packages. The processor circuitry may include and/or cooperate with one or more accelerators. In some examples, accelerators are implemented by logic circuitry to perform certain tasks more quickly and/or efficiently than can be done by a general purpose processor. Examples of accelerators include ASICs and FPGAs such as those discussed herein. A GPU or other programmable device can also be an accelerator. Accelerators may be on-board the processor circuitry, in the same chip package as the processor circuitry and/or in one or more separate packages from the processor circuitry.

FIG. 8 is a block diagram of another example implementation of the processor circuitry 612 of FIG. 6. In this example, the processor circuitry 612 is implemented by FPGA circuitry 800. The FPGA circuitry 800 can be used, for example, to perform operations that could otherwise be performed by the example microprocessor 700 of FIG. 7 executing corresponding machine readable instructions. However, once configured, the FPGA circuitry 800 instantiates the machine readable instructions in hardware and, thus, can often execute the operations faster than they could be performed by a general purpose microprocessor executing the corresponding software.

More specifically, in contrast to the microprocessor 700 of FIG. 7 described above (which is a general purpose device that may be programmed to execute some or all of the machine readable instructions represented by the flowcharts of FIGS. 4 and/or 5 but whose interconnections and logic circuitry are fixed once fabricated), the FPGA circuitry 800 of the example of FIG. 8 includes interconnections and logic circuitry that may be configured and/or interconnected in different ways after fabrication to instantiate, for example, some or all of the machine readable instructions represented by the flowcharts of FIGS. 4 and/or 5. In particular, the FPGA 800 may be thought of as an array of logic gates, interconnections, and switches. The switches can be programmed to change how the logic gates are interconnected by the interconnections, effectively forming one or more dedicated logic circuits (unless and until the FPGA circuitry 800 is reprogrammed). The configured logic circuits enable the logic gates to cooperate in different ways to perform different operations on data received by input circuitry. Those operations may correspond to some or all of the software represented by the flowcharts of FIGS. 4 and/or 5. As such, the FPGA circuitry 800 may be structured to effectively instantiate some or all of the machine readable instructions of the flowcharts of FIGS. 4 and/or 5 as dedicated logic circuits to perform the operations corresponding to those software instructions in a dedicated manner analogous to an ASIC. Therefore, the FPGA circuitry 800 may perform the operations corresponding to the some or all of the machine readable instructions of FIGS. 4 and/or 5 faster than the general purpose microprocessor can execute the same.

In the example of FIG. 8, the FPGA circuitry 800 is structured to be programmed (and/or reprogrammed one or more times) by an end user by a hardware description language (HDL) such as Verilog. The FPGA circuitry 800 of FIG. 8, includes example input/output (I/O) circuitry 802 to obtain and/or output data to/from example configuration circuitry 804 and/or external hardware (e.g., external hardware circuitry) 806. For example, the configuration circuitry 804 may implement interface circuitry that may obtain machine readable instructions to configure the FPGA circuitry 800, or portion(s) thereof. In some such examples, the configuration circuitry 804 may obtain the machine readable instructions from a user, a machine (e.g., hardware circuitry (e.g., programmed or dedicated circuitry) that may implement an Artificial Intelligence/Machine Learning (AI/ML) model to generate the instructions), etc. In some examples, the external hardware 806 may implement the microprocessor 700 of FIG. 7. The FPGA circuitry 800 also includes an array of example logic gate circuitry 808, a plurality of example configurable interconnections 810, and example storage circuitry 812. The logic gate circuitry 808 and interconnections 810 are configurable to instantiate one or more operations that may correspond to at least some of the machine readable instructions of FIGS. 4 and/or 5 and/or other desired operations. The logic gate circuitry 808 shown in FIG. 8 is fabricated in groups or blocks. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 808 to enable configuration of the electrical structures and/or the logic gates to form circuits to perform desired operations. The logic gate circuitry 808 may include other electrical structures such as look-up tables (LUTs), registers (e.g., flip-flops or latches), multiplexers, etc.

The interconnections 810 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 808 to program desired logic circuits.

The storage circuitry 812 of the illustrated example is structured to store result(s) of the one or more of the operations performed by corresponding logic gates. The storage circuitry 812 may be implemented by registers or the like. In the illustrated example, the storage circuitry 812 is distributed amongst the logic gate circuitry 808 to facilitate access and increase execution speed.

The example FPGA circuitry 800 of FIG. 8 also includes example Dedicated Operations Circuitry 814. In this example, the Dedicated Operations Circuitry 814 includes special purpose circuitry 816 that may be invoked to implement commonly used functions to avoid the need to program those functions in the field. Examples of such special purpose circuitry 816 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 800 may also include example general purpose programmable circuitry 818 such as an example CPU 820 and/or an example DSP 822. Other general purpose programmable circuitry 818 may additionally or alternatively be present such as a GPU, an XPU, etc., that can be programmed to perform other operations.

Although FIGS. 7 and 8 illustrate two example implementations of the processor circuitry 612 of FIG. 6, many other approaches are contemplated. For example, as mentioned above, modern FPGA circuitry may include an on-board CPU, such as one or more of the example CPU 820 of FIG. 8. Therefore, the processor circuitry 612 of FIG. 6 may additionally be implemented by combining the example microprocessor 700 of FIG. 7 and the example FPGA circuitry 800 of FIG. 8. In some such hybrid examples, a first portion of the machine readable instructions represented by the flowcharts of FIG. 4 and/or 5 may be executed by one or more of the cores 702 of FIG. 7 and a second portion of the machine readable instructions represented by the flowcharts of FIGS. 4 and/or 5 may be executed by the FPGA circuitry 800 of FIG. 8.

In some examples, the processor circuitry 612 of FIG. 6 may be in one or more packages. For example, the processor circuitry 700 of FIG. 7 and/or the FPGA circuitry 800 of FIG. 8 may be in one or more packages. In some examples, an XPU may be implemented by the processor circuitry 612 of FIG. 6, which may be in one or more packages. For example, the XPU may include a CPU in one package, a DSP in another package, a GPU in yet another package, and an FPGA in still yet another package.

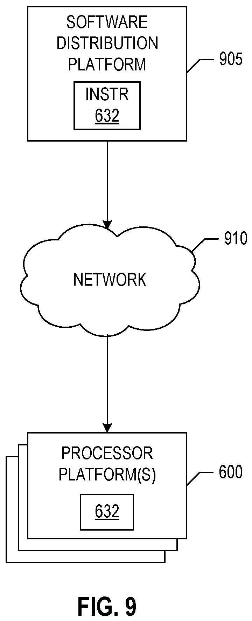

A block diagram illustrating an example software distribution platform 905 to distribute software such as the example machine readable instructions 632 of FIG. 6 to hardware devices owned and/or operated by third parties is illustrated in FIG. 9. The example software distribution platform 905 may be implemented by any computer server, data facility, cloud service, etc., capable of storing and transmitting software to other computing devices. The third parties may be customers of the entity owning and/or operating the software distribution platform 905. For example, the entity that owns and/or operates the software distribution platform 905 may be a developer, a seller, and/or a licensor of software such as the example machine readable instructions 632 of FIG. 6. The third parties may be consumers, users, retailers, OEMs, etc., who purchase and/or license the software for use and/or re-sale and/or sub-licensing. In the illustrated example, the software distribution platform 905 includes one or more servers and one or more storage devices. The storage devices store the machine readable instructions 632, which may correspond to the example machine readable instructions 400 of FIGS. 4 and/or 5, as described above. The one or more servers of the example software distribution platform 905 are in communication with a network 910, which may correspond to any one or more of the Internet and/or any of the example networks 204, 626 and 910 described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 632 from the software distribution platform 905. For example, the software, which may correspond to the example machine readable instructions 400 of FIGS. 4 and/or 5, may be downloaded to the example processor platform 600, which is to execute the machine readable instructions 632 to implement the example hybrid pipeline 100. In some example, one or more servers of the software distribution platform 905 periodically offer, transmit, and/or force updates to the software (e.g., the example machine readable instructions 632 of FIG. 6) to ensure improvements, patches, updates, etc., are distributed and applied to the software at the end user devices.

From the foregoing, it will be appreciated that example systems, methods, apparatus, and articles of manufacture have been disclosed that improve an accuracy and efficiency of computing and/or otherwise solving graph algorithms and/or any type of non-modeled algorithm that typically takes its input from one or more graphs having nodes and edges. In particular, prior techniques to generate solutions to graph algorithms employed heuristics regarding which ones of nodes to apply as input to the graph algorithm, in which such heuristics are sometimes appropriate or not depending on, for instance, a class and/or type of node and/or node characteristics. In other words, mere application of heuristics requires graph inputs to be "attempted" with the hope that valid and/or otherwise useful output results. Unlike the mere heuristic approaches, examples disclosed herein apply a hybrid framework having (a) machine learning modeling of input graph data and (b) algorithmic solvers to receive the ML output in a manner that improves a likelihood that such graph data is relevant to a particular computational objective of the graph algorithm of interest. Furthermore, the described framework allows both embedding and classifying modules of the machine learning to be trained and tailored for the specific categories of graphs. The disclosed systems, methods, apparatus, and articles of manufacture improve the efficiency of using a computing device by applying input graph data to the graph algorithm having a relatively highest likelihood of relevance to the graph algorithm, thereby reducing wasted computational resources on calculating solutions not meaningful or otherwise relevant. From the foregoing, it will also be appreciated that example systems, methods, apparatus, and articles of manufacture have been disclosed that apply machine learning and algorithmic solvers in a hybrid manner to avoid reliance upon discretionary heuristics that lead to error and inaccuracy of graph algorithm solutions. The disclosed systems, methods, apparatus, and articles of manufacture improve the efficiency of using a computing device by applying inputs to algorithmic solvers that have a particular ranked likelihood of satisfying one or more objectives of the algorithmic solver, thereby avoiding computational waste by attempting inputs that have little chance of relevance. The disclosed systems, methods, apparatus, and articles of manufacture are accordingly directed to one or more improvement(s) in the operation of a machine such as a computer or other electronic and/or mechanical device.

Example methods, apparatus, systems, and articles of manufacture to improve algorithmic solver performance are disclosed herein. Further examples and combinations thereof include the following:

Example 1 includes an apparatus to solve a graph algorithm, comprising interface circuitry to access a graph input, and processor circuitry including one or more of at least one of a central processing unit, a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus, a Field Programmable Gate Array (FPGA), the FPGA including logic gate circuitry, a plurality of configurable interconnections, and storage circuitry, the logic gate circuitry and interconnections to perform one or more second operations, the storage circuitry to store a result of the one or more second operations, or Application Specific Integrate Circuitry (ASIC) including logic gate circuitry to perform one or more third operations, the processor circuitry to perform at least one of the first operations, the second operations or the third operations to instantiate graph transformation circuitry to generate a vector representation corresponding to a graph input, vector classification circuitry to generate node embedding classification instructions, the node embedding classification instructions to cause an output layer of probabilities corresponding to nodes of the graph input, loss calculation circuitry to train a model based on a target algorithmic function, the loss calculation circuitry to inject a solution diversity to reduce equivalent solution error of the target algorithmic function, and algorithmic solver circuitry to calculate one or more solutions based on ranked ones of the output layer of probabilities.

Example 2 includes the apparatus as defined in example 1, wherein the processor circuitry is to link the ranked ones of the output layer of probabilities to a minimum loss error.

Example 3 includes the apparatus as defined in example 1 or example 2, wherein the processor circuitry is to softmax the output layer of the node embedding classification instructions to generate the output layer of probabilities.

Example 4 includes the apparatus as defined in any of examples 1 to 3, wherein the processor circuitry is to form a pipeline with graph transforming circuitry, vector classification circuitry and algorithmic solving circuitry.

Example 5 includes the apparatus as defined in any of examples 1 to 4, wherein the processor circuitry is to apply backpropagation to the hybrid pipeline to improve an accuracy metric of the model.

Example 6 includes the apparatus as defined in any of examples 1 to 5, wherein the processor circuitry is to improve model accuracy by injecting node features into nodes of the graph input.

Example 7 includes at least one machine-readable storage medium comprising instructions that, when executed, cause at least one processor to at least generate a vector representation corresponding to a graph input, generate node embedding classification instructions, the node embedding classification instructions to cause an output layer of probabilities corresponding to nodes of the graph input, train a model based on a target algorithmic function, inject a solution diversity to reduce equivalent solution error of the target algorithmic function, and calculate solutions based on ranked ones of the output layer of probabilities.

Example 8 includes the machine-readable storage medium as defined in example 7, wherein the instructions, when executed, cause the at least one processor to link the ranked ones of the output layer of probabilities to a minimum loss error.

Example 9 includes the machine-readable storage medium as defined in any of examples 7 and 8, wherein the instructions, when executed, cause the at least one processor to softmax the output layer of the node embedding classification instructions to generate the output layer of probabilities.

Example 10 includes the machine-readable storage medium as defined in any of examples 7 to 9, wherein the instructions, when executed, cause the at least one processor to form a hybrid pipeline with a graph embedding stage, a node embedding stage, and an algorithmic solver stage.

Example 11 includes the machine-readable storage medium as defined in example 10, wherein the instructions, when executed, cause the at least one processor to apply backpropagation to the hybrid pipeline to improve an accuracy metric of the model.

Example 12 includes the machine-readable storage medium as defined in any of examples 7 to 12, wherein the instructions, when executed, cause the at least one processor to improve model accuracy by injecting node features into nodes of the graph input.

Example 13 includes an apparatus to solve a graph algorithm, comprising graph transforming circuitry to generate a vector representation corresponding to a graph input, vector classification circuitry to generate a node embedding machine learning classifier, the node embedding machine learning classifier to cause an output layer of probabilities corresponding to nodes of the graph input, loss calculating circuitry to train a model based on a target algorithmic function, the loss calculating circuitry to inject a solution diversity to reduce equivalent solution error of the target algorithmic function, and algorithmic solving circuitry to calculate solutions based on ranked ones of the output layer of probabilities.

Example 14 includes the apparatus as defined in example 13, wherein the ranked ones of the output layer of probabilities correspond to a minimum loss error.

Example 15 includes the apparatus as defined in any of examples 13 to 14, wherein the vector classification circuitry is to softmax the output layer of the node embedding machine learning classifier to generate the output layer of probabilities.

Example 16 includes the apparatus as defined in any of examples 13 to 15, wherein the graph transforming circuitry, the vector classification circuitry and the algorithmic solving circuitry form a hybrid pipeline.

Example 17 includes the apparatus as defined in example 16, further including graph modeling circuitry to apply backpropagation to the hybrid pipeline to improve an accuracy metric of the model.

Example 18 includes the apparatus as defined in any of examples 13 to 17, further including node feature modification circuitry to improve model accuracy by injecting node features into nodes of the graph input.

Example 19 includes a method comprising generating a vector representation corresponding to a graph input, generating node embedding classification instructions, the node embedding classification instructions to cause an output layer of probabilities corresponding to nodes of the graph input, training a model based on a target algorithmic function, injecting a solution diversity to reduce equivalent solution error of the target algorithmic function, and calculating solutions based on ranked ones of the output layer of probabilities.

Example 20 includes the method as defined in example 19, further including linking the ranked ones of the output layer of probabilities to a minimum loss error.

Although certain example systems, methods, apparatus, and articles of manufacture have been disclosed herein, the scope of coverage of this patent is not limited thereto. On the contrary, this patent covers all systems, methods, apparatus, and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus, comprising:

   interface circuitry to access a graph input; and
   processor circuitry including one or more of:

   at least one of a central processing unit, a graphic processing unit or a digital signal processor, the at least one of the central processing unit, the graphic processing unit or the digital signal processor having control circuitry to control data movement within the processor circuitry, arithmetic and logic circuitry to perform one or more first operations corresponding to instructions, and one or more registers to store a result of the one or more first operations, the instructions in the apparatus;
   a Field Programmable Gate Array (FPGA), the FPGA including logic gate circuitry, a plurality of configurable interconnections, and storage circuitry, the logic gate circuitry and

   interconnections to perform one or more second operations, the storage circuitry to store a result of the one or more second operations; or
   Application Specific Integrate Circuitry (ASIC) including logic gate circuitry to perform one or more third operations;
   the processor circuitry to perform at least one of the one or more first operations, the one or more second operations or the one or more third operations to instantiate:

   graph transformation circuitry to generate a vector representation corresponding to a graph input;
   vector classification circuitry to generate node embedding classification instructions, the node embedding classification instructions to cause an output layer of probabilities corresponding to nodes of the graph input;
   loss calculation circuitry to train a model based on a target algorithmic function, the loss calculation circuitry to inject a solution diversity to reduce equivalent solution error of the target algorithmic function; and
   algorithmic solver circuitry to calculate one or more solutions based on ranked ones of the output layer of probabilities.

2. The apparatus as defined in claim 1, wherein the processor circuitry is to link the ranked ones of the output layer of probabilities to a minimum loss error.

3. The apparatus as defined in claim 1, wherein the processor circuitry is to form a pipeline with graph transforming circuitry, vector classification circuitry and algorithmic solving circuitry.

4. The apparatus as defined in claim 1, wherein the processor circuitry is to apply backpropagation to the hybrid pipeline to improve an accuracy metric of the model.

5. The apparatus as defined in any one of claims 1-4, wherein the processor circuitry is to improve model accuracy by injecting node features into nodes of the graph input.

6. At least one machine-readable storage medium comprising instructions that, when executed, cause at least one processor to at least:

   generate a vector representation corresponding to a graph input;
   generate node embedding classification instructions, the node embedding classification instructions to cause an output layer of probabilities corresponding to nodes of the graph input;
   train a model based on a target algorithmic function;
   inject a solution diversity to reduce equivalent solution error of the target algorithmic function; and
   calculate solutions based on ranked ones of the output layer of probabilities.

7. The machine-readable storage medium as defined in claim 6, wherein the instructions, when executed, cause the at least one processor to link the ranked ones of the output layer of probabilities to a minimum loss error.

8. The machine-readable storage medium as defined in claim 6, wherein the instructions, when executed, cause the at least one processor to softmax the output layer of the node embedding classification instructions to generate the output layer of probabilities.

9. The machine-readable storage medium as defined in claim 6, wherein the instructions, when executed, cause the at least one processor to form a hybrid pipeline with a graph embedding stage, a node embedding stage, and an algorithmic solver stage.

10. The machine-readable storage medium as defined in claim 9, wherein the instructions, when executed, cause the at least one processor to apply backpropagation to the hybrid pipeline to improve an accuracy metric of the model.

11. An apparatus, comprising:

   graph transforming circuitry to generate a vector representation corresponding to a graph input;
   vector classification circuitry to generate a node embedding machine learning classifier, the node embedding machine learning classifier to cause an output layer of probabilities corresponding to nodes of the graph input;
   loss calculating circuitry to train a model based on a target algorithmic function, the loss calculating circuitry to inject a solution diversity to reduce equivalent solution error of the target algorithmic function; and
   algorithmic solving circuitry to calculate solutions based on ranked ones of the output layer of probabilities.

12. The apparatus as defined in claim 11, wherein the vector classification circuitry is to softmax the output layer of the node embedding machine learning classifier to generate the output layer of probabilities.

13. The apparatus as defined in claim 11, wherein the graph transforming circuitry, the vector classification circuitry and the algorithmic solving circuitry form a hybrid pipeline.

14. The apparatus as defined in claim 13, further including graph modeling circuitry to apply backpropagation to the hybrid pipeline to improve an accuracy metric of the model.

15. The apparatus as defined in claim 11, further including node feature modification circuitry to improve model accuracy by injecting node features into nodes of the graph input.

**FIG. 1**

EP 4 109 344 A1

GRAPH INPUT

108

NETWORK
204

200

202

GRAPH MODELING CIRCUITRY

| GRAPH OBTAINER CIRCUITRY | 206 |
| GRAPH TRANSFORMATION CIRCUITRY | 208 |
| VECTOR CLASSIFICATION CIRCUITRY | 210 |

| LOSS CALCULATION CIRCUITRY | 212 |
| ALGORITHMIC SOLVER CIRCUITRY | 214 |
| NODE FEATURE MODIFICATION CIRCUITRY | 216 |

**FIG. 2**

EP 4 109 344 A1

17

300

302

| NODE EMBEDDING VEC |
| NODE EMBEDDING VEC |
| NODE EMBEDDING VEC |

⋮

| NODE EMBEDDING VEC |

304

$FC_1$

306

RELU

308

$FC_2$

310

SOFTMAX

312

| NODE PROBABILITY VEC |
| NODE PROBABILITY VEC |
| NODE PROBABILITY VEC |

⋮

| NODE PROBABILITY VEC |

**FIG. 3**

400

START

NO

402

GRAPH RECEIVED?

YES

TRANSFORM GRAPH TO VECTORS — 404

CLASSIFY VECTORS — 406

SELECT ALGORITHMIC SOLVER — 408

GENERATE SOLUTIONS BASED ON
CONSTRAINED OUTPUT OF CLASSIFIER
(e.g., CLASSIFICATION CIRCUIT) — 410

ADD NODE
FEATURES — 418

TRAINING? — 412

YES

APPLY
BACK
PROPAGATION — 416

NO

PUBLISH SOLVER RESULT(S) — 414

END

**FIG. 4**

406

CLASSIFY VECTORS

GENERATE CLASSIFIER STRUCTURE
502

GENERATE AN OUTPUT VECTOR SIZE AS
PROBABILITY MAPS
504

GENERATE HINDSIGHT LOSS FUNCTION TO
MAINTAIN DIVERSITY IN PROBABILITY MAPS
506

RETURN

**FIG. 5**

**FIG. 6**

**FIG. 7**

FIG. 8

SOFTWARE
DISTRIBUTION
PLATFORM
905

INSTR
632

NETWORK
910

PROCESSOR
PLATFORM(S)
600

632

## FIG. 9

Europäisches
Patentamt

European
Patent Office

Office européen
des brevets

# EUROPEAN SEARCH REPORT

Application Number

EP 22 16 3926

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHUWEN LI ET AL: "Combinatorial Optimization with Graph Convolutional Networks and Guided Tree Search", ARXIV.ORG, CORNELL UNIVERSITY LIBRARY, 201 OLIN LIBRARY CORNELL UNIVERSITY ITHACA, NY 14853, 25 October 2018 (2018-10-25), XP080927664, * figure 1 * * sections 4-6 * | 1-15 | INV. G06N3/04 G06N3/08 |
| X | QUENTIN CAPPART ET AL: "Combinatorial optimization and reasoning with graph neural networks", ARXIV.ORG, CORNELL UNIVERSITY LIBRARY, 201 OLIN LIBRARY CORNELL UNIVERSITY ITHACA, NY 14853, 27 April 2021 (2021-04-27), XP081929311, * sections 2.5 and 3.12 * | 1-15 | |

TECHNICAL FIELDS
SEARCHED       (IPC)

G06N

The present search report has been drawn up for all claims

| Place of search | Date of completion of the search | Examiner |
|---|---|---|
| The Hague | 7 September 2022 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.............................................................................

& : member of the same patent family, corresponding document

EPO FORM 1503 03.82 (P04C01)